# EUROPEAN PATENT SPECIFICATION

(11) **EP 1 063 595 B1**
(45) Date of publication and mention of the grant of the patent: **12.11.2003**
(21) Application number: 00305046.5
(22) Date of filing: 14.06.2000
(51) Int. Cl.: G06F 13/40, H04N 7/60, H04L 12/56

(54) **Video/network interface**
Videosignal/Netzwerk-Interface
Module d'interface de réseau et de signaux vidéo

(30) Priority: 23.06.1999 US 338788
(43) Date of publication of application: 27.12.2000
(73) Proprietor: Tut Systems, Inc., Lake Oswego, Oregon 97035 (US)
(72) Inventor: Crosby, Philip S., Portland, Oregon 97219 (US); Prasannan, Venkataraman, Portland, Oregon 97229 (US); van Dusen, Charles H., Beaverton, Oregon 97075 (US)
(74) Representative: Molyneaux, Martyn William

(56) References cited:
- US-A- 4 630 256
- US-A- 5 455 915
- US-A- 5 544 315
- US-A- 5 664 218
- US-A- 5 799 017

## Description

### BACKGROUND OF THE INVENTION

The present invention relates to telecommunications networks, and more particularly to a video/network interface device architecture.

The history of telecommunications networks has largely been one of interfaces. There exist clever interface methods for combining (multiplexing) and uncombining (demultiplexing) groups of signals in a hierarchical fashion that permit a given signal to be conveyed along with millions of others with little or no apparent damage. However these interfaces have had the same kind of inputs and outputs -- telecommunications signals.

The need for a new type of interface element has become apparent. An example is the interface that enables a video production facility (content facility) to be efficiently connected to a telecommunications network -- a network interface device (NID). One side of the interface is a digital telecommunications system using a standard protocol, such as ATM-SONET (see US-A-5 544 315.). The other side has standard interfaces to the digital video and audio signals that might be found in the video production facility. The video and audio signals are constant clock rate streams with separate routing and control circuits, while telecommunications systems use embedded routing and control in a single stream in the form of data packets.

What is desired is an edge device that provides an interface between the telecommunications network and a user video/audio environment.

### BRIEF SUMMARY OF THE INVENTION

Accordingly the present invention provides a video/network interface device architecture that uses uni-directional busses to transmit data packets to/from one or more facility or studio interface module. A communications interface module is coupled between a telecommunications network and the uni-directional busses, having an input circuit for coupling the network packets via the input communications interface module to the uni-directional bus for input to the studio interface modules and having an output circuit for coupling network packets from the other uni-directional bus to the output communications interface output module. A control processor is situated at the middle of the busses to control time slots for the network packets to/from the studio interface modules. Since signals do not have to change direction on the uni-directional busses, they may be operated at a higher operating frequency than could be done with a single bi-directional bus.

The objects, advantages and other novel features of the present invention are apparent from the following detailed description when read in conjunction with the appended claims and attached drawing.

### BRIEF DESCRIPTION OF THE SEVERAL VIEWS OF THE DRAWING

Fig. 1 is a block diagram view of a video/network interface device for processing video/audio data into packets according to the present invention.
Fig. 2 is an illustrative view of a physical backplane using two PCI buses according to the present invention.

### DETAILED DESCRIPTION OF THE INVENTION

In the video/network environment two assumptions are made: (1) an interface to a packet-based telecommunications network has one input and/or output per Network Interface Device (NID) (Communications Interface Module -- Input and/or Output -- CIMI and CIMO for short); and (2) a module-based interface to a facility has at least one, and probably several, digital signal(s) with a nominally constant bit rate (Studio Interface Module -- SIM). Based on the first assumption the architecture of the present invention uses two uni-directional packet busses -- one carrying packets to the CIMO and one carrying packets from the CIMI. In this way the signal directions on the two packet busses may be determined solely by the geographic pin locations. Since the signals do not have to change direction on the bus, the bus may be used at a higher operating frequency than could be done with a bi-directional bus.

The architecture may be further enhanced through the use of clock regenerators and double termination of the bus, together with a time slot identification signal to permit accurate, scheduled insertion or reception of packet data by the SIMs.

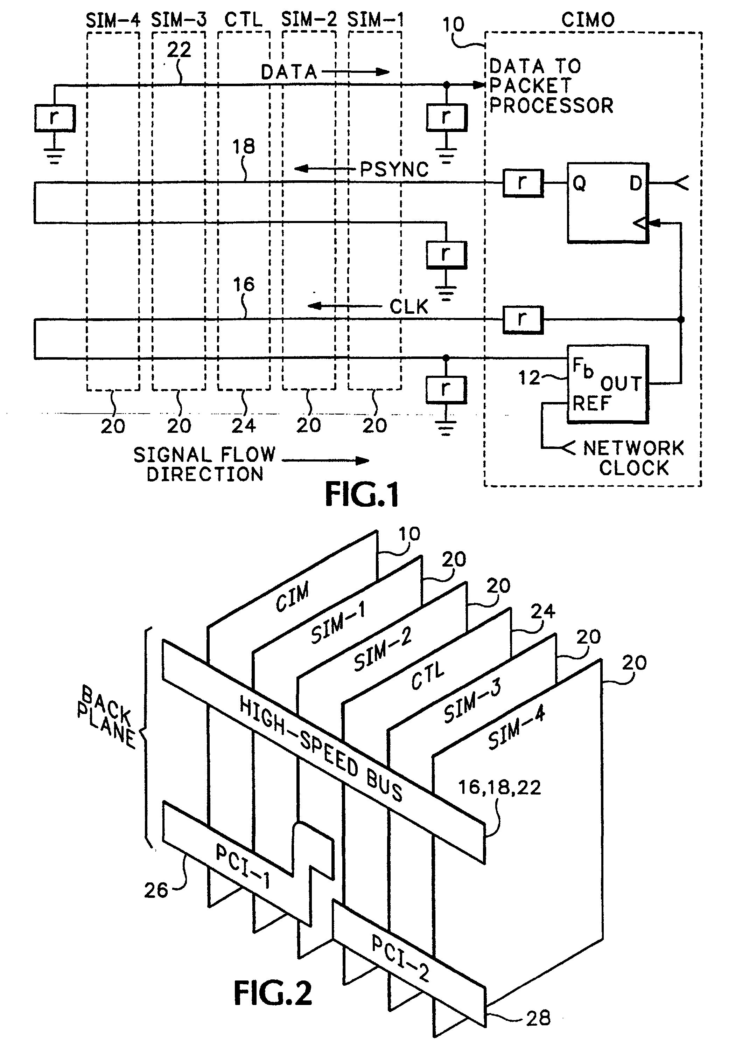

Referring now to Fig. 1 a network clock derived from the telecommunication network is used to resynchronize the output of a clock synchronizer chip **12**, such as an AV9170 manufactured by Integrated Circuit Systems, Inc., in a CIMO **10**. The output of the clock synchronizer chip **12** clocks a packet sync register **14.** The synchronized clock signal and the packet sync signal are routed over respective busses **16, 18** to one or more SIMs **20.** The data from the SIMs **20** is output onto a data bus **22** for output by the CIMO **10** over the network. The busses **16, 18, 22** make up one uni-directional high-speed bus, with the clock signals proceeding to the left as shown and the data signals proceeding to the right. The buses are terminated in their respective characteristic impedances to eliminate reflections. By routing the clock and packet sync signals in the direction that data travels from the SIMs, each SIM contributes an ATM packet in a designated time slot with the Psync signal providing the demarkation. This allows operation at clock rates that are not limited by the bus transit time.

A similar arrangement, i.e., clock and framing signals propagating in the same direction but data propagating from to the SIMs along a uni-directional bus, may easily be envisioned for the other high-speed bus that moves ATM packets from a CIMI to the SIMs **20**.

Time slot assignment is done by a centralized control module **24** using a more generalized microcomputer bus architecture, such as a Personal Computer Interface (PCI) bus. The control module is located at approximately the midpoint of the high-speed bus **16, 18, 22.** This minimizes the problem of providing updates of the time slot assignments by minimizing propagation time. Furthermore with busses that have severe physical length constraints, such as PCI, the modules on one side of the high-speed bus may be driven from one side of a PCI "bridge" while the modules on the other side are driven from the other side of the PCI bridge.

Fig. 2 shows the arrangement of the CIM **10** -- both Input and Output, the SIMs **20** and the control module **24** and their connections to a backplane that contains both the PCI control busses **26, 28** and the high-speed bus **16, 18, 22** which is really two busses -- one carrying data for ATM packets to the CIM(O) from the SIMs and the other carrying data from ATM packets to the SIMs from the CIM(I). Additional reference signals that may be needed for timing of the studio video signals may also be carried on the high-speed bus.

The connection from the control module **24** to the one side (PCI-1) of the PCI bus **26** uses a center connector. In fact all of the module boards are likely to have a center connector that is used to convey signals to and from the rear panel. Thus the connector layouts may be identical among the three types of module boards.

It also is possible to have two CIMs mounted next to one another, only one of which is active. This may be used to allow for a rapid changeover in the event that a problem should occur in either the CIM or the network connection. There will still be a slight interruption of service as the traffic is switched from one CIM to the other, but the changeover may be effected without physical intervention.

Thus the present invention provides a video/network interface device architecture using uni-directional busses to transport data to/from a Communications Interface Module (CIM) from/to one or more Studio Interface Modules (SIM), the CIM being coupled to a telecommunications network and the SIMs being coupled to the local video/audio environment.

## Claims

1. A video/network interface device architecture comprising:
a first high-speed uni-directional bus for receiving data packets;
a second high-speed uni-directional bus for transmitting data packets;
a communications interface module coupled to the first and second high-speed uni-directional busses for receiving data packets from and transmitting data packets to the first and second high-speed uni-directional busses respectively;
at least one facility interface module coupled to the first and second high-speed uni-directional busses for transmitting data packets to and receiving data packets from the first and second high-speed uni-directional busses respectively; and
a control module coupled to the first and second high-speed uni-directional busses to provide time slot assignments for the data packets to/from the at least one facility interface module.

## Patentansprüche

1. Video-/Netzschnittstellenvorrichtungsarchitektur, die folgendes umfasst:
einen ersten unidirektionalen Hochgeschwindigkeitsbus zum Empfang von Datenpaketen;
einen zweiten unidirektionalen Hochgeschwindigkeitsbus zum Senden von Datenpaketen;
ein Kommunikationsschnittstellenmodul, das mit den ersten und zweiten unidirektionalen Hochgeschwindigkeitsbussen verbunden ist, um Daten entsprechend von den ersten und zweiten unidirektionalen Hochgeschwindigkeitsbussen zu empfangen und zu diesen zu übermitteln;
mindestens ein Vorrichtungsschnittstellenmodul, das mit den ersten und zweiten unidirektionalen Hochgeschwindigkeitsbussen verbunden ist, um Daten entsprechend von den ersten und zweiten unidirektionalen Hochgeschwindigkeitsbussen zu empfangen und zu diesen zu übermitteln; und
ein Steuermodul, das mit den ersten und zweiten unidirektionalen Hochgeschwindigkeitsbussen gekoppelt ist, um Zeitschlitzzuordnungen für die Datenpakete zu/von dem mindestens einen Vorrichtungsschnittstellenmodul vorzusehen.

## Revendications

1. Architecture de dispositif d'interface vidéo/réseau comprenant :
un premier bus unidirectionnel grande vitesse pour recevoir des paquets de données ;
un second bus unidirectionnel grande vitesse pour transmettre des paquets de données ;
un module d'interface de communications couplé aux premier et second bus unidirectionnels grande vitesse pour recevoir des paquets de données depuis et pour transmettre des paquets de données vers les premier et second bus unidirectionnels grande vitesse respectivement ;
au moins un module d'interface d'installation couplé au premier et second bus unidirectionnels grande vitesse pour transmettre des paquets de données vers et pour recevoir des paquets de données depuis les premier et second bus unidirectionnels grande vitesse respectivement ; et
un module de contrôle couplé aux premier et second bus unidirectionnels grande vitesse pour fournir des attributions d'intervalles de temps pour les paquets de données vers/depuis le au moins un module d'interface d'installation.
